# EUROPEAN PATENT SPECIFICATION

(11) **EP 3 791 984 B1**
(45) Date of publication and mention of the grant of the patent: **10.08.2022**
(21) Application number: 19727441.8
(22) Date of filing: 06.05.2019
(51) Int. Cl.: B23D 53/00, B23D 55/08, B23D 55/00

(54) **BAND SAW CUTTING EQUIPMENT**
BANDSÄGESCHNEIDVORRICHTUNG
ÉQUIPEMENT DE COUPE À SCIE À RUBAN

(30) Priority: 07.05.2018 ES 201830449
(43) Date of publication of application: 17.03.2021
(73) Proprietor: Amebo Food Machinery, S.L., 17244 Cassà de la Selva (ES)
(72) Inventor: PRIMO RUIZ, Raul, 08213 Polinyà (ES); BOSCH DOMINGO, Eduardo, 17244 Cassà de la Selva (ES)
(74) Representative: Ponti & Partners, S.L.P
(86) International application number: PCT/ES2019/070296
(87) International publication number: WO 2019/215362

(56) References cited:
- FR-A1- 2 150 920
- TW-U- M 526 451
- US-A- 321 194
- US-A- 2 143 242
- US-A- 3 518 909
- US-A- 5 001 957
- US-A1- 2005 098 013

## Description

The present invention refers to a product cutting equipment, preferably for frozen food products, where the cutting is carried out by means of a band saw cutting system, preferably working in an automatic mode of product passage through the cutting system, although it can also be used in a manual mode of product displacement. The present invention refers in particular to a band saw cutting equipment according to the preamble of claim 1.

### Background of the invention

Such an equipment is known from US 321 194 A or from FR 2 150 920 A1.

Product cutting equipment which has a band saw for the cutting of such products, where the band saw is usually driven by a system of motorised pulleys in which the band saw is installed, is known and, therefore, is in the state of the art. The band saw is guided and tensioned to prevent it from leaving the chosen position at the moment of cutting when the product exerts a force on the band saw.

The rotation of the pulleys allows the band saw to rotate at the speed of these pulleys, in such a way that by means of a serrated side on the side of the band saw where the product to be cut enters, the cutting of this product can take place, which is pushed in this direction, towards the serrated side of the band saw.

In order to cut the product, it has to be placed on the front of the band saw, to pass it through the band saw and cut a new portion of the product. Thus, for each new cut that needs to be made on the product, the product will make a return movement to the starting position of cutting as well as the movement by the band saw itself, so there are unproductive movements and unproductive time involved with the cutting machine.

There are also known band saws with double serrated edges, which allows them to cut on both sides, being able to make the cut in both directions, but which cannot be guided in the cutting plane, having saw serrated edges on both sides and not being able to counteract the thrust of the product when it is pressed against the saw band to make the cut. This lack of guidance causes a lack of safety in the position of the band saw, which can affect the precision of the cut of the product, as well as a possible exit of the band saw itself from the pulley system and therefore its malfunction, not being able to be used for the cutting of meat, fish, blocks, etc., whether frozen or not.

### Description of the invention

The band saw cutting equipment of the present invention resolves the cited drawbacks and has other advantages that will be described below.

According to the invention, there is provided a band saw cutting equipment defined by the features of claim 1.

Further preferred embodiments are defined by the features of the dependent claims.

Advantageously, the cutting equipment contains at least one cutting system consisting of two individual band saws located adjacent to each other without touching each other, both on the same cutting plane, with this separation between the two individual band saws, each of these two band saws having a single side with cutting serrated edges located on the farthest opposite edges between the two band saws, in such a way that, when cutting a product and passing it through these band saws in any direction, the first edge they find will be serrated to make the cut of the product, while the inner edges closest between saws will not have cutting serrated edges.

The pressure on the band saws exerted by the passage of the product usually causes the movement of these band saws in the same cutting plane, especially if it involves frozen products, causing a possible contact of one saw against the other and, therefore, its possible deterioration, or could flex the band saws in the perpendicular plane, having different measures of cut product. For this reason, the cutting system of the equipment described in the present invention has at least one guide and separation piece of both band saws, having preferably two to four of these guide and separation pieces installed, where the separation piece is fixed in a position that guides each of the band saws in the cutting plane, preventing it from bending easily and leaving the said plane by means of guiding elements. In the same way, this guiding and separating piece keeps both band saws separated in the cutting plane by means of a minimum separating element.

The placement of these pieces of guide and separation allow to minimise the risk of exit of the saws from their position in the system of pulleys in which they rotate by the pressure action of the product to be cut, so they will preferably be placed on both sides of the cutting area, between this area and the next or previous pulley in such a way that the pressures in this area do not affect the correct passage of the band saws through the pulleys. This configuration of a separation piece on either side of the cutting area can be reinforced by placing more pieces on either side of the cutting area.

The separation between the band saws of the cutting system is introduced as a stop of the movement of the band saw that receives the pressure of the product to be cut in the cutting direction and to avoid the exit of its pulley wheel, as well as to avoid the contacts between these band saws by its non-serrated inner edges, with the minimum distance of the separation element being preferably less than 30 mm, and more preferably making the minimum between 2 mm to 6 mm, in such a way that, maintaining this distance between them, a greater separation could not give problems to the passage of the product to be cut through the second band saw, as the product can be turned towards the second cutting saw, although higher separations could be obtained with systems of separation of the cut product.

The products to be cut are preferably passed automatically by means of a gripping and displacement system of the product to be cut. The product can be of different dimensions in such a way that the cutting area of band saws can be more or less wide. Thus, to keep the cutting plane as fixed as possible, preferably, the cutting equipment has at least two pieces of guidance and separation of both band saws, each of them being located on each side of the cutting area of the product, being able to regulate the height of the position of at least one of the two pieces of guidance and separation that define the cutting area where the product passes.

The cutting equipment can incorporate, preferably in its automatic mode of use, a protective system of the band saws formed by a surrounding structure of these band saws that automatically moves to cover the cutting area when an operator enters the area of protected influence, with the aim of preventing the operator accidentally introducing some part of their body in the cutting area or that a break in the band saw at that time can come out and affect them, in addition to protecting the band saw itself from possible incidents of materials carried by the operator.

Also, preferably, the cutting equipment has a cleaning system of the band saws which eliminates the possible substances or residues of the cut of the product that can accumulate habitually in the cutting serrated edges, with the effectiveness of this cut being able to be reduced.

The cutting equipment can be configured to multiply the cutting systems available in the same equipment in a similar way to that indicated above. Simultaneous cuts can be made in parallel planes, having two or more cutting systems that make these cuts in parallel planes.

This advantageous configuration in two band saws per cutting system installed on the cutting equipment improves the productivity of the cutting systems with a single cutting saw with a single cutting edge and, therefore, with a single cutting direction and the need to make unproductive displacements of the product to be cut, solving this with the two cutting directions that are possible in the present invention, by having the cutting edges of each of the opposite band saws, on the external parts of each band saw, the external part of each of them being considered as the farthest edge from the other band saw.

In the same way, this new configuration solves the problem of single band saws with two serrated cutting edges that, allowing cutting in two directions, prevent their subjection to pressures in the same cutting plane, having malfunction problems, which are minimised with this configuration of two band saws per cutting system, with their corresponding guide and separation pieces that act to retain the possible displacement of the band saws when the product to be cut is pressed on them, thus being able, for example, to cut frozen food products, as well as non-frozen products, whether or not they have bone in them.

### Brief description of the drawings

In order to better understand the description made, a set of drawings has been provided which, schematically and solely by way of non-limiting example, represents a practical case of embodiment.
Figure 1 is an elevational view of the cutting equipment in a view perpendicular to the cutting plane.
Figure 2 is an elevational view of the cutting mechanism through the cutting plane.
Figure 3 is a perspective view of the band saw guide piece.
Figure 4 is a perspective view of the detail of the location of the top guide pieces and the protection associated with the equipment.
Figure 5 is a detailed perspective view of the location of the lower guide pieces.
Figure 6 is a perspective view of the cleaning element detail of band saws.

### Description of a preferred embodiment

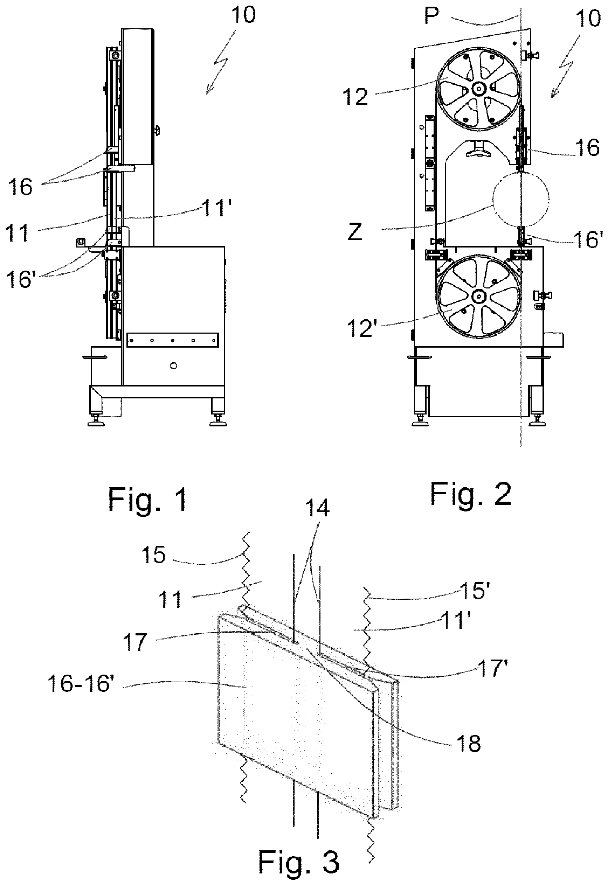

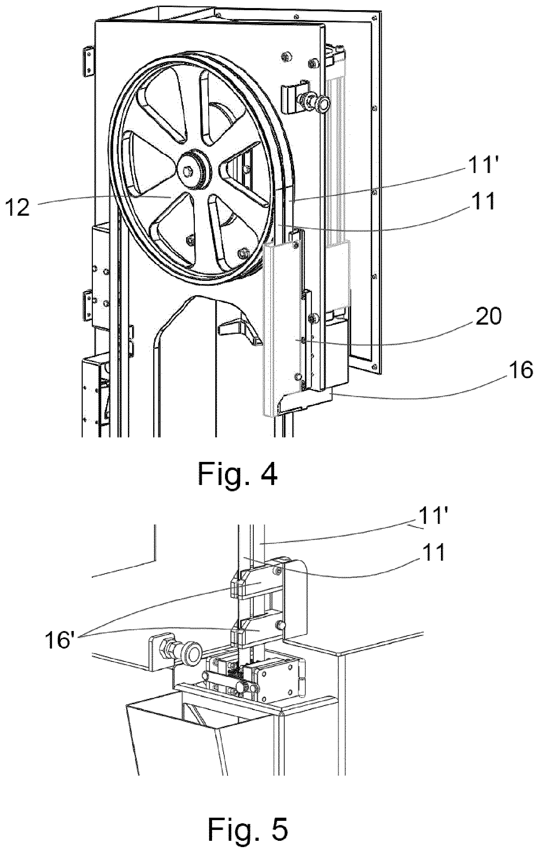

In the present preferred embodiment of the invention, and as shown in Figures 1 to 6, the products cutting equipment (10) by band saw, in this case frozen food products, is based on a cutting system that has two individual band saws (11, 11'), contiguous without touching each other, having such band saws (11, 11') in the same cutting plane (P), mounted on the same pulley wheel (12) with double channel/rail, where alternatively, they could be mounted on a double pulley wheel system with a single channel/rail each of them, being able to be independent pulley systems mounted jointly, with this separation between band saws (11, 11').

The band saws (11, 11') have a single cutting edge (15), being positioned in such a way that the inner edges (14) do not have cutting serrated edges, but the opposite outer edges (15) are serrated to have the possibility of cutting and, in this way, it is possible to pass the product to be cut in one direction or in another indifferently, and the product can be cut in both directions, not having to make an extra displacement of the product to the beginning of the equipment to make the cut in the same direction. The outer edge (15) is the part of the band saw farthest from the other band saw, while the inner edges (14) are the closest edges between them of each band saw (11, 11').

These band saws (11, 11') are preferably separated by a distance of less than 6 mm, preferably 4 mm to 5 mm, which is achieved in the first instance by the separation between the channels/rails of the pulley wheel (12). In alternative embodiments, minimum separations of 2 mm are reached to avoid risks of contacts between saws (11, 11'). By introducing auxiliary elements such as cut product separators or the like, superior separations could be achieved.

Alternatively, these band saws (11, 11') can be separated by a distance of less than 8 mm. Alternatively, they can be separated by 6 mm to 4 mm, as mentioned above, which is achieved in the first instance by the separation between the channels/rails of the pulley wheel (12).

As the band saws (11, 11') are subjected to a pressure caused by the passage of the product to be cut on these band saws (11, 11'), these (11, 11'), although they are tensioned to make their rotation between the pulleys (12) and avoid varying their cutting plane, they may tend to move in the same cutting plane in the same direction of advance of the product to be cut by its pressure against them, which could cause the pulley rail/channel (12) to come off or impact the first band saw (11) to make the cut against the adjacent band saw (11) and cause them to contact each other, which could result in damage to the band saws (11, 11'). In the same way, the cutting friction of the band saws (11, 11') on the product can cause perpendicular forces to the cutting plane, depending on the material to be cut, which can cause cuts of non-regular thickness.

The cutting equipment (10) includes, in the present embodiment, two pairs of guide and separation pieces (16, 16') fixed to the cutting equipment (10) that define between each pair (16, 16') a cutting area (Z), guiding the passage through these pairs of pieces (16, 16') of each of the band saws (11, 11') to minimise variations in the cutting plane between these two pairs of pieces (16, 16') and physically separating them in such a way that although there is such pressure, they do not come into contact with each other (11, 11').

As an alternative to this and other possible embodiments, it is possible to have a single pair of guide and separation pieces, one piece on each side of the cutting area, or a single guide and separation piece in the cutting system that performs this function in the area next to the cut, preferably. More guide pieces are also available depending on the configuration of the required cutting area and the expected cutting resistance characteristics of the product, preferably grouped in pairs on either side of the cutting area.

Each of the guiding and separation pieces (16, 16'), as can be seen in Figure 3, consists of a body which, in the present embodiment, has at least tungsten carbide, having a high resistance to wear, in such a way that materials with a similar resistance to wear could be used in the same way, such as thermal plastics with graphite, ceramic materials, fibres or other special plastics.

According to the invention, this piece of guidance and separation has a groove (17), as a guidance element, for each of the passages to guide each band saw (11, 11'), with dimensions slightly higher than the thickness and width of these band saws (11, 11') in such a way that pressures against them that are in the plane perpendicular to the cutting, are prevented by such guidance by the grooves. In the same piece there is a separation (18) between the grooves (17), as a separation element, which corresponds to the minimum separation desired between the two band saws (11, 11') and avoids the displacement of the band saw (11, 11') that receives the pressure of the product when making the cut, in the cutting plane in the cutting direction.

In the case of alternative designs, the guide and separation piece can be kept in separate guide and separation bodies instead of in one piece.

Not according to the invention, the guide and separation piece can be made with bearings, not shown in the figures, instead of contact surfaces of the tungsten carbide body, based on a pair of facing bearings, as a guiding element, which leave a gap between them slightly greater than the width of the band saw (11, 11'), and as a separation element for the guide and separation piece, one or more bearings between the two band saws (11, 11') would be used to maintain a minimum distance between these saws (11, 11').

In the present example, there is an upper guide and separation piece (16) that can be adjusted in height, in order to define a cutting zone (C) variable between the two guide and separation pieces (16, 16), where the lower piece (16') is fixed close to the platform where the product to be cut is moved.

Alternatively, the guiding and separating pieces can all be fixed or adjustable, all of them, to have different configurations of the cutting equipment (10).

The cutting equipment (10), in the present embodiment of use in automatic mode by means of the movement of the product by an automated grip and movement device, includes a protective system (20) of the band saws (11, 11') with automatic movement at the moment in which the entry of an operator is detected in the associated safety enclosure of the cutting equipment. This protective system (20) is formed by an enclosing structure of these band saws (11, 11'), which when detecting the entry of the person in the safety area, moves this structure to the cutting area, minimising the possibility of damage if there was a break in these band saws (11, 11') and preventing that by accident an operator could access the cutting area.

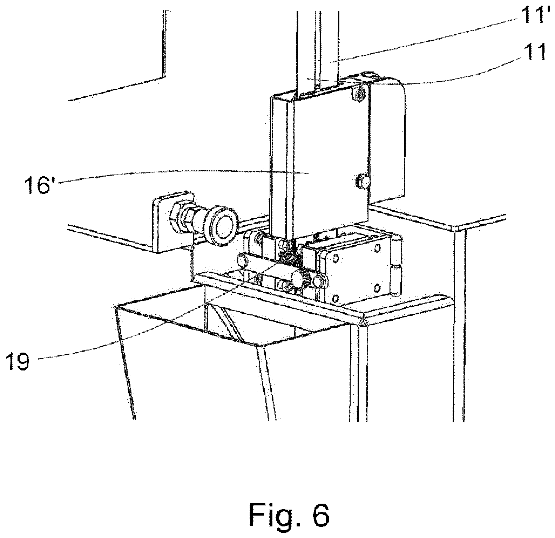

As another auxiliary element, and as can be seen in Figure 6, the cutting equipment (10) includes a band saw cleaning system (19), where this cleaning system (19) is formed by the action of brushes that are beside and on the side of the band saw (11, 11') and having an elastic system in such a way that, as the brush is used, it is supplied, bringing it closer to the band saw (11, 11') and in such a way that any impact/contact on the said brush by the band saw (11, 11') is absorbed by the elastic system, preferably springs.

As an alternative configuration that would include the previous elements of the main accomplishment commented and its commented alternatives, the cutting equipment (10) has two or more cutting systems that make cuts in parallel planes, for the same passage of the product, that can make several cuts at the same time.

Although reference has been made to a specific embodiment of the invention, it is clear to a person skilled in the art that the band saw cutting equipment is susceptible to numerous variations and modifications, and that all the details mentioned can be replaced by others technically equivalent, without departing from the scope of protection defined by the attached claims.

## Claims

1. Band saw cutting equipment (10) which has a pulley system (12) in which the band saw cutting system is installed, wherein the cutting equipment contains at least one cutting system made up of two band saws (11,11') located in the same cutting plane contiguously without touching each other, with a separation between them, each of the two band saws having a single side with cutting serrated edges located on the farthest edges between the two band saws, that is in their opposite edges to allow cutting in both directions of passage through the cutting system, where the cutting system has at least one guide and separation piece (16) of both band saws fixed in a position that guides each of the band saws in the cutting plane, preventing it from bending and exiting from that plane by means of guiding elements and keeping both band saws separated in the cutting plane by means of a minimum separation element (18); **characterized in that** the guiding element of the guide piece and separation of each band saw is based on a body with a groove (17) slightly wider than the band saw, through which the band saw (11) passes.

2. Band saw cutting equipment in accordance with claim 1, wherein the separation element (18) of the guiding and separating piece (16) is based on a body between the two guiding grooves (17,17') of band saws that maintain a minimum distance between these saws.

3. Band saw cutting equipment in accordance with the above claims, wherein the guiding elements for each band saw and the separating element (16) are contained in the same guiding and separating body through which the band saws (11,11') pass.

4. Band saw cutting equipment in accordance with the above claims, wherein the body forming the guiding element and the separating element comprises at least tungsten carbide.

5. Band saw cutting equipment in accordance with claims 1, and 2, wherein the minimum separation between the two band saws (11,11') located in the same cutting plane is achieved by the dimension of the separating element being less than 30 mm.

6. Band saw cutting equipment in accordance with claim 5, wherein the minimum separation between the two band saws (11,11') located in the same cutting plane is achieved by the dimension of the separating element being between 2 mm and 6 mm.

7. Band saw cutting equipment in accordance with claim 1, wherein the cutting equipment has at least two pieces (16) of guidance and separation of both band saws, each of them being located on each side of the cutting area of the product.

8. Band saw cutting equipment in accordance with claim 1, wherein the cutting equipment has at least one pair of guiding and separating pieces (16) of both band saws, each pair being located on each side of the cutting area of the product.

9. Band saw cutting equipment in accordance with claims 7 and 8, wherein at least one of the two guiding and separating pieces (16) or one of the pairs of guiding and separating pieces located on either side of the cutting area can regulate the height of its position.

10. Band saw cutting equipment in accordance with claim 1, wherein the cutting equipment has a system of pulleys (12) with double channel or rail, wherein each of the band saws is installed in each channel or rail.

11. Band saw cutting equipment in accordance with claim 1, wherein the cutting equipment has a system of pulleys (12) with a double pulley wheel, wherein each of the band saws is installed on individual pulley wheels.

12. Band saw cutting equipment in accordance with claim 1, wherein the cutting equipment has a band saw protection system formed by a band saw enclosing structure that automatically moves to cover the cutting area.

13. Band saw cutting equipment in accordance with claim 1, wherein the cutting equipment has a cleaning system for band saws.

14. Band saw cutting equipment in accordance with claim 13, wherein the cleaning system of band saws is formed by brushes beside and on the side of the band saws with an elastic system of approach to the band saw and absorption of contacts with these band saws.

15. Band saw cutting equipment in accordance with claim 1, wherein the cutting equipment has two or more cutting systems that make cuts in parallel planes.

## Patentansprüche

1. Bandsäge-Schneideinrichtung (10), die ein Umlenkrollensystem (12) hat, in dem das Bandsägen-Schneidsystem installiert ist, wobei die Schneideinrichtung wenigstens ein Schneidsystem umfasst, das aus zwei Bandsägen (11, 11') gebildet ist, die sich in derselben Schneidebene nebeneinander ohne sich gegenseitig zu berühren mit einer Trennung dazwischen befinden, wobei jede der zwei Bandsägen eine einzige Seite mit gezackten Schneidkanten hat, die an den entferntest liegenden Kanten zwischen den zwei Bandsägen, d. h. an ihren entgegengesetzten Kanten liegen, um ein Schneiden in beiden Durchgangsrichtungen durch das Schneidsystem zu ermöglichen, wobei das Schneidsystem wenigstens ein Führungs- und Trennstück (16) für beide Bandsägen hat, das in einer Position fixiert ist, das jede der Bandsägen in der Schneidebene führt, um mittels der Führungselemente ein Verbiegen und Abweichen von der Ebene zu verhindern und beide Bandsägen in der Schneidebene mittels eines Elements (18) für eine minimale Trennung getrennt zu halten; **dadurch gekennzeichnet, dass** das Führungselement des Führungs- und Trennstücks der jeweiligen Bandsäge auf einem Körper mit einer Rille (17) basiert, die etwas breiter als die Bandsäge ist, durch die die Bandsäge (11) verläuft.

2. Bandsäge-Schneideinrichtung nach Anspruch 1, wobei das Trennelement (18) des Führungs- und Trennstücks (16) auf einem Körper zwischen den zwei Führungsrillen (17, 17') der Bandsägen basiert, der einen minimalen Abstand zwischen diesen Sägen aufrechterhält.

3. Bandsäge-Schneideinrichtung nach den vorhergehenden Ansprüchen, wobei die Führungselemente für jede Bandsäge und das Trennelement (16) in demselben Führungs- und Trennkörper enthalten sind, durch den die Bandsägen (11, 11') verlaufen.

4. Bandsäge-Schneideinrichtung nach den vorhergehenden Ansprüchen, wobei der Körper, der das Führungselement und das Trennelement bildet, wenigstens Wolframkarbid enthält.

5. Bandsäge-Schneideinrichtung nach Anspruch 1 und 2, wobei die minimale Trennung zwischen den zwei Bandsägen (11, 11'), die sich in derselben Schneidebene befinden, dadurch erreicht wird, dass die Abmessung des Trennelements kleiner als 30 mm ist.

6. Bandsäge-Schneideinrichtung nach Anspruch 5, wobei die minimale Trennung zwischen den zwei Bandsägen (11, 11'), die sich in derselben Schneidebene befinden, dadurch erreicht wird, dass die Abmessung des Trennelements im Bereich zwischen 2 mm und 6 mm liegt.

7. Bandsäge-Schneideinrichtung nach Anspruch 1, wobei die Schneideinrichtung wenigstens zwei Führungs- und Trennstücke (16) für beide Bandsägen hat, die sich jeweils auf jeder Seite des Schneidbereichs des Produkts befinden.

8. Bandsäge-Schneideinrichtung nach Anspruch 1, wobei die Schneideinrichtung wenigstens ein Paar Führungs- und Trennstücke (16) für beide Bandsägen hat, wobei jedes Paar sich jeweils auf jeder Seite des Schneidbereichs des Produkts befindet.

9. Bandsäge-Schneideinrichtung nach Anspruch 7 und 8, wobei wenigstens eines der zwei Führungs- und Trennstücke (16) oder eines der Paare Führungs- und Trennstücke, das sich auf jeder Seite des Schneidbereichs befindet, die Höhe seiner Position einstellen kann.

10. Bandsäge-Schneideinrichtung nach Anspruch 1, wobei die Schneideinrichtung ein Umlenkrollensystem (12) mit Doppelkanal oder -schiene hat, wobei jede der Bandsägen in jedem Kanal oder jeder Schiene installiert ist.

11. Bandsäge-Schneideinrichtung nach Anspruch 1, wobei die Schneideinrichtung ein Umlenkrollensystem (12) mit einer Doppelumlenkrolle hat, wobei jede der Bandsägen an individuellen Umlenkrollen installiert ist.

12. Bandsäge-Schneideinrichtung nach Anspruch 1, wobei die Schneideinrichtung ein Bandsäge-Schutzsystem hat, das durch eine Bandsäge-Umhüllungsstruktur gebildet ist, die sich automatisch bewegt, um den Schneidbereich zu bedecken.

13. Bandsäge-Schneideinrichtung nach Anspruch 1, wobei die Schneideinrichtung ein Reinigungssystem für Bandsägen hat.

14. Bandsäge-Schneideinrichtung nach Anspruch 13, wobei das Reinigungssystem der Bandsägen aus Bürsten neben und an der Seite der Bandsägen mit einem elastischen Annäherungssystem an die Bandsäge und zum Abfedern von Kontakten mit diesen Bandsägen gebildet ist.

15. Bandsäge-Schneideinrichtung nach Anspruch 1, wobei die Schneideinrichtung zwei oder mehr Schneidsysteme hat, die in parallelen Ebenen Schnitte ausführen.

## Revendications

1. Matériel de coupe à scie à ruban (10) présentant un système de poulie (12) dans lequel est installé le système de coupe à scie à ruban, dans lequel le matériel de coupe contient au moins un système de coupe composé de deux scies à ruban (11, 11') situées dans le même plan de coupe de manière contiguë sans se toucher, avec une séparation entre elles, chacune des deux scies à ruban présentant un seul côté avec des bords de coupe dentelés situés sur les bords les plus éloignés entre les deux scies à ruban, qui est dans leurs bords opposés afin de permettre une coupe dans les deux directions de passage à travers le système de coupe, dans lequel le système de coupe présente au moins une pièce de guidage et de séparation (16) des deux scies à ruban, fixée dans une position qui guide chacune des scies à ruban dans le plan de coupe, en l'empêchant de plier et de sortir de ce plan au moyen d'éléments de guidage, et qui maintient les deux scies à ruban séparées dans le plan de coupe au moyen d'un élément de séparation minimum (18) ;
**caractérisé en ce que** l'élément de guidage de la pièce de guidage et de séparation de chaque scie à ruban, est basé sur un corps avec une rainure (17) légèrement plus large que la scie à ruban, à travers lequel passe la scie à ruban (11).

2. Matériel de coupe à scie à ruban selon la revendication 1, dans lequel l'élément de séparation (18) de la pièce de guidage et de séparation (16) est basé sur un corps entre les deux rainures de guidage (17, 17') des scies à ruban en maintenant une distance minimum entre ces scies.

3. Matériel de coupe à scie à ruban selon les revendications précédentes, dans lequel les éléments de guidage de chaque scie à ruban et l'élément de séparation (16) sont contenus dans le même corps de guidage et de séparation à travers lequel passent les scies à ruban (11, 11').

4. Matériel de coupe à scie à ruban selon les revendications précédentes, dans lequel le corps qui forme l'élément de guidage et l'élément de séparation comprend au moins du carbure de tungstène.

5. Matériel de coupe à scie à ruban selon les revendications 1 et 2, dans lequel la séparation minimum entre les deux scies à ruban (11, 11') situées dans le même plan de coupe, est obtenue avec une dimension de l'élément de séparation inférieure à 30 mm.

6. Matériel de coupe à scie à ruban selon la revendication 5, dans lequel la séparation minimum entre les deux scies à ruban (11, 11') situées dans le même plan de coupe, est obtenue avec une dimension de l'élément de séparation comprise entre 2 mm et 6 mm.

7. Matériel de coupe à scie à ruban selon la revendication 1, dans lequel le matériel de coupe présente au moins deux pièces de guidage et de séparation (16) des deux scies à ruban, chacune d'elles se situant de chaque côté de la zone de coupe du produit.

8. Matériel de coupe à scie à ruban selon la revendication 1, dans lequel le matériel de coupe présente au moins une paire de pièces de guidage et de séparation (16) des deux scies à ruban, chaque paire se situant de chaque côté de la zone de coupe du produit.

9. Matériel de coupe à scie à ruban selon les revendications 7 et 8, dans lequel l'une au moins des deux pièces de guidage et de séparation (16), ou l'une des paires de pièces de guidage et de séparation située des deux côtés de la zone de coupe, permet de régler la hauteur de sa position.

10. Matériel de coupe à scie à ruban selon la revendication 1, dans lequel le matériel de coupe présente un système de poulies (12) avec un canal ou un rail double, dans lequel chacune des scies à ruban est installée dans chaque canal ou rail.

11. Matériel de coupe à scie à ruban selon la revendication 1, dans lequel le matériel de coupe présente un système des poulies (12) avec une réa double, dans lequel chacune des scies à ruban est installée sur des réas individuelles.

12. Matériel de coupe à scie à ruban selon la revendication 1, dans lequel le matériel de coupe présente un système de protection de scie à ruban constitué par une structure d'enceinte de scie à ruban qui se déplace automatiquement afin de couvrir la zone de coupe.

13. Matériel de coupe à scie à ruban selon la revendication 1, dans lequel le matériel de coupe présente un système de nettoyage des scies à ruban.

14. Matériel de coupe à scie à ruban selon la revendication 13, dans lequel le système de nettoyage des scies à ruban est constitué par des brosses à proximité et sur le côté des scies à ruban, avec un système d'approche élastique vers la scie de bande et une absorption des contacts avec ces scies à ruban.

15. Matériel de coupe à scie à ruban selon la revendication 1, dans lequel le matériel de coupe présente deux systèmes de coupe ou plus, qui exécutent des coupes dans des plans parallèles.
